# DEMANDE DE BREVET EUROPEEN

(11) **EP 3 985 455 A1**
(43) Date de publication de la demande: **20.04.2022**
(21) Numéro de dépôt: 21195267.6
(22) Date de dépôt: 07.09.2021
(51) Int. Cl.: G04D 7/00

(54) **ENSEMBLE DE MESURE DU DEGRÉ D'HUMIDITÉ RELATIVE À L'INTÉRIEUR D'UN BOÎTIER DE MONTRE**

(30) Priorité: 16.10.2020 EP 20202331
(71) Demandeur: The Swatch Group Research and Development Ltd, 2074 Marin (CH)
(72) Inventeur: DUBUGNON, Dominique, 1162 Saint-Prex (CH); BLATTER, Cédric, 1291 Commugny (CH); WILLEMIN, Michel, 2515 Prêles (CH)
(74) Mandataire: ICB SA

(57) **Abrégé**

L'invention concerne un ensemble de mesure (1) d'un degré d'humidité relative à l'intérieur d'une montre (2), comprenant ladite montre (2) et un dispositif de détermination (4) du degré d'humidité présent dans l'enceinte (9) d'un boîtier (3) de cette montre (2), le dispositif de détermination (4) comprenant un système optique en espace libre et une unité de contrôle (7), le système comportant :
- un module émetteur (5) d'au moins un faisceau lumineux (8) ;
- un module récepteur (6) dudit au moins un faisceau lumineux (8) ;
ladite unité de contrôle (7) étant connectée aux dits modules (5, 6) et ledit au moins un faisceau lumineux (8) émis par le module émetteur (5) définissant un chemin optique en partie compris dans ledit boîtier (3) et allant jusqu'au module récepteur (6) et l'unité de contrôle (7) étant configurée pour évaluer l'absorption dudit faisceau lumineux (8) par la vapeur d'eau susceptible d'être présente dans ladite enceinte (9) du boîtier (3).

## Description

### DOMAINE TECHNIQUE DE L'INVENTION

L'invention concerne un ensemble de mesure du degré d'humidité relative à l'intérieur d'un boîtier de montre.

### ETAT DE LA TECHNIQUE

L'étanchéité d'une montre est mesurée en bars (le bar est une unité de pression, 1 bar équivalant à 1 atmosphère (atm). Le degré d'étanchéité d'une montre est souvent indiqué en mètres (m). Les montres désignées comme étanches sont destinées à une utilisation quotidienne courante qui doit garantir une résistance à l'eau, dans des activités telles que par exemple la natation, ou plus simplement sous la douche. Les montres dites de plongée doivent respecter des normes plus strictes, et garantir selon la norme actuelle l'étanchéité à une profondeur minimum de 100 m.

Pour garantir l'étanchéité, les montres sont en général munies d'un jeu de joints d'étanchéité positionnés dans les points d'assemblage de certaines pièces de la montre, telles que la glace, la lunette et le fond de la montre, ainsi que d'éléments mobiles tels que la couronne et les boutons poussoir. Avec le temps et l'utilisation, les propriétés mécaniques des joints se modifient et l'étanchéité de la montre peut parfois se détériorer. La montre devient alors plus perméable à l'eau ou à la vapeur d'eau. Les conséquences peuvent être des phénomènes de condensation sur la face intérieure de la glace de la montre, ou pire, d'oxydation de certains composants métalliques ou de dégradation de certains composants polymères. Il existe ainsi un besoin de pouvoir surveiller de temps en temps le degré d'humidité relative dans la montre sans forcément devoir l'ouvrir, une ouverture du boîtier de montre nécessitant un changement systématique des joints et faisant intervenir un horloger ce qui est coûteux. Un excès de vapeur d'eau dans la montre peut en effet indiquer qu'un ou plusieurs joints doivent être remplacés à court ou moyen terme.

Afin de répondre à ce besoin, il est connu des montres comportant un dispositif de mesure du degré d'humidité relative à l'intérieur de la montre. Un tel dispositif de mesure se présente sous la forme d'un module électronique apte à mesurer et enregistrer des valeurs de différents paramètres environnementaux, dont l'humidité relative. Du fait de la taille réduite d'un tel module électronique, ce dernier peut être agencé à l'intérieur d'un boîtier de montre et mesurer, via un capteur dédié, le degré d'humidité relative à l'intérieur du boîtier de montre. Il est ensuite possible de transmettre les valeurs d'humidité relatives mesurées à une station d'accueil de la montre par voie sans fil, typiquement par voie infrarouge ou radiofréquences. Le signal par exemple infrarouge émis par le module électronique traverse alors une portion transparente du boîtier de montre, typiquement la glace et est reçu par un capteur infrarouge de la station d'accueil. Un utilisateur de la montre peut ensuite visualiser les valeurs d'humidité relative mesurées via un ordinateur relié à la station d'accueil et muni d'un logiciel dédié ou un smartphone.

Toutefois, un inconvénient d'un tel dispositif électronique de mesure est qu'il nécessite une batterie ou une pile pour pouvoir alimenter les différents composants électroniques. Un tel dispositif est ainsi très peu adapté à des montres mécaniques notamment. De plus, pour des montres électroniques, il peut pénaliser l'autonomie d'un produit ou nécessiter de prendre une pile de plus grande capacité et donc augmenter le volume de la montre.

Un autre inconvénient est qu'un tel dispositif est relativement encombrant et peu discret à l'intérieur de la montre. En outre, un tel dispositif électronique de mesure est relativement onéreux et impacte donc le coût de fabrication de la montre.

### RESUMÉ DE L'INVENTION

L'invention a donc pour but de fournir un ensemble de mesure du degré d'humidité relative présent à l'intérieur d'un boîtier de montre permettant ainsi de détecter un défaut d'étanchéité d'un tel boitier et ce, à partir d'une surveillance du degré d'humidité relative dans ce boîtier sans devoir l'ouvrir. Un tel ensemble de mesure est économique, simple à mettre en œuvre, et permet une mesure fiable et rapide du degré d'humidité relative à l'intérieur du boîtier de montre.

Dans ce dessein, l'invention concerne un ensemble de mesure d'un degré d'humidité relative à l'intérieur d'une montre, comprenant ladite montre et un dispositif de détermination du degré d'humidité présent dans l'enceinte d'un boîtier de cette montre, le dispositif de détermination comprenant un système optique en espace libre et une unité de contrôle, le système comportant :
- un module émetteur d'au moins un faisceau lumineux ;
- un module récepteur dudit au moins un faisceau lumineux ;
ladite unité de contrôle étant connectée aux dits modules et ledit au moins un faisceau lumineux émis par le module émetteur définissant un chemin optique en partie compris dans ledit boîtier et allant jusqu'au module récepteur et l'unité de contrôle étant configurée pour évaluer l'absorption dudit faisceau lumineux par la vapeur d'eau susceptible d'être présente dans ladite enceinte du boîtier.

Dans d'autres modes de réalisation :
- l'ensemble de mesure comprend au moins un élément réfléchissant dudit au moins un faisceau lumineux agencé dans ladite enceinte du boîtier et/ou à l'extérieur de cette enceinte ;
- ledit au moins un élément réfléchissant, notamment un cadran du boîtier, est apte à assurer une réflexion du faisceau lumineux vers le module récepteur ;
- l'ensemble de mesure comprend une cavité optique formée de deux éléments réfléchissants agencés l'un en regard de l'autre dans l'enceinte du boîtier ;
- lesdits éléments réfléchissants présentent une réflectivité à la longueur d'onde dudit au moins un faisceau lumineux ;
- un premier élément réfléchissant est défini sur une portion d'une face interne d'une glace du boîtier en étant disposé en regard d'un deuxième élément réfléchissant agencé sur une portion du cadran ;
- le module émetteur est apte à émettre en simultanée ou en série plusieurs faisceaux lumineux à des longueurs d'ondes possédant des coefficients d'absorption différentes dans la vapeur d'eau ;
- les modules émetteur et récepteur sont disposés en regard d'une glace dudit boîtier ;
- le module émetteur est disposé en regard d'une glace dudit boîtier lorsque le module récepteur est agencé en regard d'un fond de ce boîtier ;
- le module émetteur est disposé en regard d'un fond dudit boîtier lorsque le module récepteur est agencé en regard d'une glace de ce boîtier ;
- le boîtier comprend une glace, un cadran, un mouvement et/ou un fond comprenant au moins une zone de passage dudit au moins un faisceau lumineux ;
- ledit dispositif de détermination est configuré de manière à ce que ledit au moins un faisceau lumineux circule entre le module émetteur et le module récepteur sans être guidé de façon à être confiné dans un espace différent d'un premier espace dans lequel est agencé le boitier et/ou d'un deuxième espace défini dans l'enceinte dudit boitier.

### BRÈVE DESCRIPTION DES FIGURES

Les buts, avantages et caractéristiques de cet ensemble de mesure d'un degré d'humidité relative à l'intérieur d'une montre, apparaîtront mieux dans la description suivante sur la base d'au moins une forme d'exécution non limitative illustrée par les dessins dans lesquels :
- la figure 1 est une représentation schématique d'un ensemble de mesure du degré d'humidité relative, selon un mode de réalisation de l'invention ;
- la figure 2 est une vue schématique d'une première variante de l'ensemble de mesure du degré d'humidité relative configuré pour une réalisation d'une mesure par réflexion, selon le mode de réalisation de l'invention ;
- la figure 3 est une vue schématique d'une deuxième variante de cet ensemble de mesure comprenant le dispositif de détermination du degré d'humidité configuré pour une réalisation d'une mesure par transmission, selon le mode de réalisation de l'invention ;
- la figure 4 est une vue schématique d'une troisième variante de cet ensemble de mesure configuré pour une réalisation d'une mesure par transmission et réflexion, selon le mode de réalisation de l'invention, et
- la figure 5 est une vue schématique d'une quatrième variante de cet ensemble de mesure configuré pour une réalisation d'une mesure par spectroscopie à cavité optique, selon le mode de réalisation de l'invention.

### DESCRIPTION DETAILLEE DE L'INVENTION

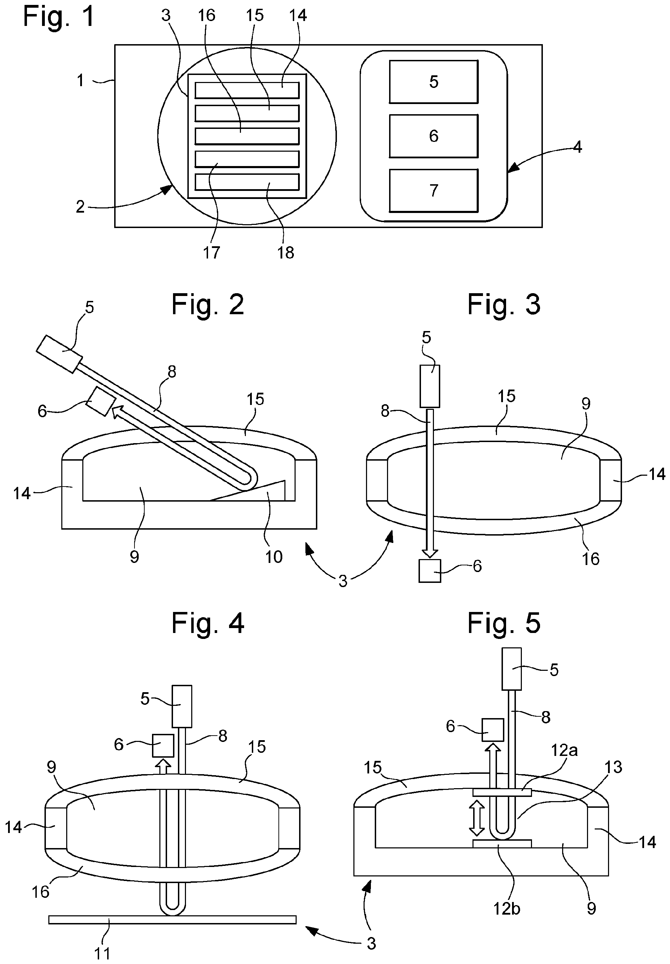

Les figures 1 à 5 représentent plusieurs variantes d'un ensemble de mesure 1 d'un degré d'humidité relative à l'intérieur d'une montre 2. On entend ici par « degré d'humidité relative » le rapport entre la pression partielle de la vapeur d'eau contenue dans l'air et la pression de vapeur saturante (ou tension de vapeur) à la même température. Autrement dit, la mesure du degré d'humidité relative correspond à une mesure du rapport entre le contenu en vapeur d'eau de l'air et sa capacité maximale à en contenir dans les mêmes conditions de température.

Cet ensemble de mesure 1 comprend la montre 2 et en particulier le boîtier 3 de montre 2, ainsi qu'un dispositif de détermination 4 du degré d'humidité apte à émettre un signal lumineux à destination du boîtier 3. On notera que la montre 2 peut être une montre 2 de tout type, telle que par exemple une montre 2 mécanique ou encore une montre 2 électronique.

Dans cette configuration, le dispositif de détermination 4 comprend un système optique et une unité de contrôle 7. Ce système optique aussi appelé « système optique en espace libre » (en anglais « Free Space Optic System » ou « FSO system ») ou « système optique de propagation de faisceaux lumineux en espace libre » ou encore « système optique sans guide d'ondes » comprend un ensemble d'éléments optiques permettant de modifier la trajectoire des faisceaux de lumière ou les propriétés de ces faisceaux. L'expression « espace libre » désigne tout médium spatial d'acheminement du signal tel que de : l'air, l'espace inter-sidéral, le vide, etc., ceci par opposition à un médium de transport matériel, tel qu'un guide d'ondes (par exemple une fibre optique). Un tel système ne prévoit pas de propagation de faisceaux lumineux dans un réseau de guides s'effectuant par couplage successifs. Dans ce système, ces faisceaux sont susceptibles de subir, sans l'utilisation de guide d'ondes, des réflexions, des réfractions, des diffusions, des diffractions, des filtrages, etc...

Ce système comprend un module émetteur 5 d'au moins un faisceau lumineux 8 et un module récepteur 6 dudit au moins un faisceau lumineux 8. Dans certaines variantes décrites par la suite, ce système optique peut aussi comprendre au moins un élément réfléchissant 10, 11, 12a, 12b encore appelé « élément optique réfléchissant » ou « réflecteur ». Un tel élément 10 à 12b est notamment apte à dévier ledit au moins un faisceau 8. En outre, on remarquera qu'un tel système optique est évidement dépourvu de guides d'onde tels que des fibres optiques.

On notera que dans ce dispositif 4, l'unité de contrôle 7 est connectée aux dits modules 5, 6.

En complément, on remarquera qu'un tel dispositif de détermination 4 est notamment configuré de manière à ce que ledit au moins un faisceau lumineux 8 circule entre le module émetteur 5 et le module récepteur 6 sans être guidé de façon à être confiné dans un espace (ou milieu) différent d'un premier espace dans lequel est agencé ledit boitier et/ou d'un deuxième espace défini dans l'enceinte dudit boitier. Autrement dit, un tel dispositif de détermination 4 est notamment configuré de manière à ce que ledit au moins un faisceau lumineux 8 circule entre le module émetteur 5 et le module récepteur 6 dans (ou en traversant) le premier espace dans lequel est agencé le boitier et/ou le deuxième espace défini dans l'enceinte dudit boitier, ledit au moins un faisceau lumineux n'étant pas guidé de façon à être confiné dans un espace (ou milieu) différent de ce premier espace et/ou ce deuxième espace.

On comprend donc qu'un tel dispositif de détermination 4 est notamment configuré de manière à ce que ledit au moins un faisceau lumineux 8 circule entre le module émetteur 5 et le module récepteur 6 sans être confiné dans un espace (ou milieu) différent du premier espace dans lequel est agencé ledit boitier et/ou du deuxième espace défini dans l'enceinte dudit boitier. Avantageusement, un tel dispositif de détermination 4 est notamment configuré de manière à ce que ledit au moins un faisceau lumineux 8 circule entre le module émetteur 5 et le module récepteur 6 dans (ou en traversant) le premier espace dans lequel est agencé le boitier et/ou le deuxième espace défini dans l'enceinte dudit boitier, ledit au moins un faisceau lumineux n'étant pas confiné dans un espace différent de ce premier espace et/ou ce deuxième espace.

On rappellera que l'espace (ou milieu) est un élément physique dans lequel se propage ledit au moins un faisceau lumineux et avec lequel ledit au moins un faisceau interagit. Une telle interaction engendre une modification des propriétés dudit faisceau. Un tel espace peut être de manière non limitative et non exhaustive de l'air, de l'eau, du verre, etc...

Dans ces conditions, ledit au moins un faisceau lumineux 8 circule dans le premier espace et/ou le deuxième espace et non dans un espace (ou milieu) spécifique spécialement défini/créé comme par exemple celui qui peut être défini/créé dans un guide d'ondes tel qu'une fibre optique. Rappelons que le principe du confinement d'un faisceau lumineux et plus généralement de la lumière est le suivant : un espace (ou milieu) diélectrique entouré d'un second espace d'indice de réfraction plus faible forme un piège pour la lumière qui se réfléchit aux frontières par réflexions totales. Les fibres optiques qui sont des guides de lumière cylindriques fonctionnent sur ce principe.

On remarquera que le deuxième espace est défini dans l'enceinte du boitier et les frontières de ce deuxième espace sont formées par des composantes de ce boitier comme une glace 15 et/ou un cadran 17, un fond 16, et une carrure 14. Le mouvement 18 est d'ailleurs agencé dans ce deuxième espace. En outre on notera que les caractéristiques notamment les caractéristiques optiques de ce deuxième espace peuvent être sensiblement similaires voire strictement similaires à celles du premier espace. Ces caractéristiques peuvent être de manière non limitative et non restrictive, l'indice de réfraction de cet espace (ou milieu), sa transparence (le terme transparence fait référence ici à un espace non absorbant), son homogénéité (à savoir si les propriétés de l'espace sont les mêmes dans tous les points qui le constituent), et son isotropie (à savoir si les propriétés de l'espace sont les mêmes dans toutes les directions), etc...

En outre, on notera que le système optique est agencé dans le premier espace et le deuxième espace.

Selon le principe de l'invention, un tel ensemble 1 vise à mesurer le degré d'humidité relative présent dans l'enceinte 9 du boîtier 3 de la montre 2 à partir de l'évaluation d'au moins une modification d'au moins une caractéristique du faisceau lumineux 8 dont le chemin optique est en partie compris dans cette enceinte 9. Cette dite au moins une modification est ici fonction du taux de vapeur d'eau présent dans cette enceinte 9 du boîtier 3. Autrement dit, le degré d'humidité est déterminé à partir d'une évaluation de l'absorption dudit faisceau lumineux 8 par la vapeur d'eau susceptible d'être présente dans l'air compris dans l'enceinte 9 du boîtier 3. On notera ici que l'on mesure l'absorption car comme on le verra par la suite, en connaissant le coefficient d'absorption du faisceau lumineux 8 on peut en déduire le nombre de molécules présent dans l'air de cette enceinte et donc la densité de cette air.

Un tel boîtier 3 comporte la carrure 14 qui est par exemple de forme annulaire et est munie d'un rebord annulaire supérieur sur lequel s'appuie une glace 15 de ce boîtier 3. Dans le boîtier 3 de montre 2 pris en exemple aux figures 1 à 4, sa configuration est sensiblement circulaire. Toutefois, l'invention n'est nullement limitée à une telle configuration de ce boîtier 3 de montre 2. Le boîtier 3 comporte aussi un cadran 17 pourvu de moyens d'affichage de l'heure.

En complément et selon les variantes de l'ensemble de mesure 1 la montre 2 et en particulier le boîtier 3 peut comprendre des composants tels qu'une glace 15, un fond 16, un cadran 17 et un mouvement 18 comprenant chacun au moins une zone de passage dudit au moins un faisceau lumineux 8. Ces composants comprennent chacun de préférence une première et une deuxième zone de passage, la première zone de passage étant susceptible d'être traversée par ledit au moins un faisceau lumineux 8 dans un premier sens et la deuxième zone de passage par le même faisceau lumineux 8 réfléchi mais dans un deuxième sens pouvant être opposé au premier sens. Dans ce boîtier 3, les premières zones de passage ou les deuxièmes zones de passage sont de préférence alignées en étant coaxiales. Ces zones de passage du cadran 17 et du mouvement 18 peuvent être chacune une ouverture/un évidement. La zone de passage du cadran 17 peut aussi être une portion transparente du cadran qui en verre par exemple un verre minéral ou un verre saphir. La zone de passage de cadran 17 peut être définie sur tout ou partie de ce cadran. S'agissant du fond 16, cette zone de passage est de préférence une portion transparente de ce fond qui peut être en verre et aussi définie sur tout ou partie de ce fond 16. Cette zone de passage du fond 16 peut aussi être en verre minéral ou en verre saphir. Une telle configuration peut être celle d'une montre 2 squelette dans laquelle l'intérieur du boîtier 3 et ses parties mobiles sont visibles sur la face avant au niveau de la glace 15 ou sur la face arrière au travers d'un tel fond 16. Dans une telle montre 2 ledit au moins un faisceau lumineux 8 émis par le dispositif de détermination 4 est apte à pénétrer dans l'enceinte 9 du boîtier 3 pas la glace 15 et à en ressortir par le fond 16.

Selon une autre variante de l'ensemble de mesure 1, la montre 2 et en particulier le boîtier 3 peut comprendre au moins un élément réfléchissant 10, 11, et/ou une cavité optique 13 formée d'au moins deux éléments réfléchissants 12a, 12b. Ces éléments réfléchissants 12a, 12b. peuvent comprendre un revêtement anti-réfléchissant aux longueurs d'ondes comprises dans le spectre visible mais réfléchissant à une longueur d'onde du faisceau lumineux. Ce revêtement peut être en oxyde d'aluminium ou encore en dioxyde de titane.

En outre, on notera que la glace 15 de ce boîtier 3 comprend une zone de passage dudit au moins un faisceau lumineux 8 qui est définie sur tout ou partie de cette glace 15. Une telle zone autorise le passage dans l'enceinte 9 dudit au moins un faisceau lumineux 8 et ce, de préférence sans modifier pour ce faisceau 8 ses caractéristiques qui sont propres à varier sous l'effet de la vapeur d'eau. Cette glace 15 peut être un verre minéral ou un verre saphir d'une épaisseur d'environ 5mm qui permet tout du moins une transmission dudit au moins un faisceau lumineux 8 ayant une longueur d'onde comprise entre 0,2 et 4,5 µm.

Dans le dispositif de détermination 4, le module émetteur 5 d'au moins un faisceau lumineux 8 comprend une source de lumière focalisée apte à émettre un faisceau lumineux vers la montre 2 à travers la glace 15 autorisant le passage de ce faisceau 8 dans l'enceinte 9 du boîtier 3. Ce module est de préférence un module émetteur 5 d'au moins un faisceau laser. La longueur d'onde de ce faisceau laser est compris entre 2,4 et 3 µm, et est de préférence de 2,6 µm. Un tel module 5 est apte à fonctionner sans impulsion en comprenant par exemple un laser à onde entretenue ou, en anglais, « continuous wave (CW) » pour « onde continue ». Un tel laser est apte à générer un faisceau de sortie continu par opposition aux lasers à Commutation-Q ou aux lasers femtoseconde qui produisent une lumière puisée. Ce module émetteur 5 peut être configuré pour mettre en œuvre une modulation, plus lente notamment avec superposition, afin d'améliorer le rapport signal sur bruit en rejetant le bruit hors de la fréquence de modulation. Un décalage en fréquence lente peut également être prévu.

S'agissant du module récepteur 6, il comprend au moins un capteur optique de lumière et en particulier au moins un capteur optique dudit au moins un faisceau lumineux dans le présent mode de réalisation un faisceau laser émis par le module émetteur 5. Ce capteur optique comporte au moins une photodiode. Ce module récepteur 6 est aussi pourvu d'un convertisseur analogique-numérique permettant de convertir une grandeur analogique relative à l'intensité dudit au moins un faisceau 8 en une valeur numérique. On notera que lorsqu'il comprend au moins deux capteurs optiques, le module récepteur 6 est apte à amplifier la différence des signaux provenant de ces capteurs optiques afin de réduire l'effet du bruit d'intensité relatif dudit au moins un faisceau laser, ou d'optimiser au mieux la gamme dynamique du convertisseur analogique-numérique. Un tel module récepteur 6 est apte à recevoir ledit faisceau lumineux 8 qui a circulé dans l'enceinte 9 du boîtier 3.

Ainsi que nous l'avons évoqué le dispositif de détermination 4 comprend également l'unité de contrôle 7. Cette unité de contrôle 7 peut être un ordinateur qui comprend des ressources matérielles et logicielles en particulier au moins un processeur coopérant avec des éléments de mémoire. Cette unité de contrôle 7 est apte à exécuter des instructions pour la mise en oeuvre d'un programme d'ordinateur afin de contribuer à la détermination de la mesure du degré d'humidité relative dans l'enceinte 9 du boîtier 3 de la montre 2.

Cette unité de contrôle 7 est connectée aux modules émetteur et récepteur 5, 6. Une telle unité de contrôle 7 est apte à piloter ces modules 5, 6 afin de participer à la détermination de la mesure du degré d'humidité relative dans l'enceinte 9 du boîtier 3. Cette unité de contrôle 7 est en particulier apte à effectuer des opérations de traitement du signal au travers d'opérations de modulation de signal et de détection synchrone. Cette unité de contrôle 7 est configurée pour évaluer l'absorption dudit faisceau lumineux 8 par la vapeur d'eau susceptible d'être présente dans ladite enceinte 9 du boîtier 3. Une telle unité de contrôle 7 comprend par exemple dans ses éléments de mémoire une ou plusieurs tables de correspondance entre des valeurs d'intensité de faisceau lumineux 8 et/ou des coefficients d'absorption dudit faisceau lumineux 8 par la vapeur d'eau, avec des valeurs de degré d'humidité relative associées aux valeurs d'intensité du faisceau et/ou aux coefficients d'absorption et ce, afin de participer à l'évaluation du degré d'humidité dans le boîtier 3.

Dans une première variante de l'ensemble de mesure 1 illustrée sur la figure 2, cet ensemble est configuré pour réaliser une mesure du degré d'humidité selon un principe de réflexion dudit au moins un faisceau lumineux 8 dans l'enceinte 9 du boîtier 3. Dans cette variante, les modules émetteur et réflecteur 5, 6 sont disposés en regard de la glace 15. Dans ce contexte, ce boîtier 3 comprend alors la glace 15 pourvue de sa zone de passage dudit au moins un faisceau lumineux 8 vers l'enceinte 9 du boîtier 3 ainsi qu'un élément réfléchissant 10. Un tel élément réfléchissant 10 peut être compris dans tout ou partie du cadran 17 de la montre 2. Ainsi, ledit au moins un faisceau lumineux 8 va alors suivre un chemin optique partant du module émetteur 5 pénétrant ensuite dans l'enceinte 9 en traversant la zone de passage de la glace 15 pour être enfin réfléchi par le cadran 17 vers le module récepteur 6.

Dans une deuxième variante de l'ensemble de mesure 1 illustrée sur la figure 3, cet ensemble 1 est configuré pour réaliser une mesure du degré d'humidité selon un principe de transmission dudit au moins un faisceau lumineux 8 à travers l'enceinte 9 du boîtier 3. Dans cette variante, le module émetteur 5 est disposé en regard de la glace 15 et le module récepteur 6 en regard du fond 16, ou encore le module émetteur 5 est disposé en regard du fond 16 et le module récepteur 6 en regard de la glace 15. Dans ce contexte, ce boîtier 3 comprend alors la glace 15, le mouvement 18, le cadran 17 et le fond 16 qui sont chacun pourvu de leur zone de passage respective dudit au moins un faisceau lumineux 8 qui traverse ainsi cette enceinte 9 du boîtier 3. On notera que dans une telle configuration, la montre 2 peut être une montre 2 squelette. Ainsi, ledit au moins un faisceau lumineux 8 va alors suivre un chemin optique partant du module émetteur 5 pénétrant ensuite dans l'enceinte 9 en traversant la zone de passage de la glace 15 pour enfin ressortir de cette enceinte 9 par la zone de passage du fond 16 et ce, en direction du module récepteur 6.

Dans une troisième variante de l'ensemble de mesure 1 illustrée sur la figure 4, cet ensemble 1 est configuré pour réaliser une mesure du degré d'humidité selon un principe de transmission et de réflexion dudit au moins un faisceau lumineux 8 à travers l'enceinte 9 du boîtier 3. Dans cette variante, les modules émetteur et réflecteur sont disposés en regard de la glace 15 ou du fond 16. Dans ce contexte, ce boîtier 3 comprend alors un élément réfléchissant 11 agencé à l'extérieur du boîtier 3 et en regard du fond 16, et comprend aussi la glace 15, le mouvement 18, le cadran 17 et le fond 16 qui sont chacun pourvus de deux zones de passage :
- la première zone de passage pour chacun d'entre eux prévue pour la transmission dudit au moins un faisceau lumineux 8 qui traverse le boîtier 3, et
- la deuxième zone de passage pour chacun d'entre eux prévue pour la réflexion dudit au moins un faisceau lumineux 8 transmis qui traverse de nouveau le boîtier 3.

Dans cette troisième variante, ledit au moins un faisceau lumineux 8 va alors suivre un chemin optique partant du module émetteur 5 et pénétrant dans l'enceinte 9 en traversant les premières zones de passage de la glace 15, du cadran 17 du mouvement 18 pour enfin ressortir de cette enceinte 9 par la première zone de passage du fond 16 et ensuite être réfléchi sur l'élément réfléchissant 11 en direction du module récepteur 6 et ce, en retraversant l'enceinte 9 par les deuxièmes zones de passage du fond 16, du mouvement 18, du cadran 17 et de la glace 15. On notera que dans ce contexte la montre 2 peut être une montre 2 squelette.

Dans une quatrième variante de l'ensemble de mesure 1 illustrée sur la figure 4, cet ensemble 1 est configuré pour réaliser une mesure par spectroscopie à cavité optique 13 dudit au moins un faisceau lumineux 8 dans l'enceinte 9 du boîtier 3. Cette quatrième variante met en oeuvre une technique de spectroscopie permettant d'augmenter le chemin optique dans l'enceinte 9 de la montre 2 ce qui a pour conséquence d'accroitre l'absorption dudit faisceau lumineux 8 par la vapeur d'eau et d'améliorer la sensibilité de la mesure. Dans cette variante, les modules émetteur et réflecteur 5,6 sont disposés en regard de la glace 15. Dans ce contexte, ce boîtier 3 comprend alors une cavité optique 13 comprenant au moins deux éléments réfléchissants 12a, 12b présentant une réflectivité à la longueur d'onde dudit au moins un faisceau lumineux. Un premier élément est défini sur une portion d'une face interne de la glace 15, en étant disposé en regard du deuxième élément réfléchissant 12a, 12b agencé sur une portion du cadran 17. Dans cette configuration, les propriétés optiques de cette cavité optique 13 change en fonction du degré d'humidité présent dans l'enceinte 9 du boîtier 3. Plus précisément, le temps de décroissance de cette réflexivité dudit au moins un faisceau lumineux 8 dans la cavité 13 après l'arrêt d'émission de ce dernier par le module émetteur 5, est pris en compte dans cette variante dans le cadre de l'établissement de la mesure du degré d'humidité relative. Ce boîtier 3 comprend aussi dans cette variante une glace 15 qui est pourvue de deux zones de passage :
- la première zone de passage prévue pour la transmission dudit au moins un faisceau lumineux 8 vers la cavité optique 13 comprise dans l'enceinte 9 du boîtier 3, et
- la deuxième zone de passage prévue pour la réflexion dudit au moins un faisceau lumineux 8 provenant de cette cavité optique 13.

De telles première et deuxième zones de passage peuvent être semi-transparentes au spectre visible et/ou semi-réfléchissantes à l'infrarouge et/ou présenter une réflectivité inférieure à un.

Dans cette quatrième variante, ledit au moins un faisceau lumineux 8 va alors suivre un chemin optique partant du module émetteur 5 et pénétrant dans la cavité optique 13 en traversant la première zone de passage de la glace 15 pour enfin ressortir de cette cavité optique 13 par la deuxième zone de passage du cette glace 15 en direction du module récepteur 6.

On notera que la mesure du degré d'humidité réalisée par l'ensemble de mesure 1 est d'autant plus précise que la partie du chemin optique comprise dans l'enceinte 9 du boîtier 3 est longue.

Dans le dispositif de détermination 4, le module émetteur 5 est apte à émettre en simultanée ou en série plusieurs faisceaux lumineux à des longueurs d'ondes possédant des coefficients d'absorption différentes dans la vapeur d'eau. Par exemple, les longueurs d'ondes de ces faisceaux peuvent être d'environ 2,3 et 2,6 µm.

Par ailleurs, le dispositif de détermination 4 peut être un dispositif portatif ou mobile, c'est-à-dire un dispositif 4 apte à être porté par un utilisateur sans nécessiter de raccordement filaire pour son alimentation électrique.

D'autre part, ce dispositif de détermination 4 peut comprendre un élément d'affichage apte à afficher plusieurs signaux visuels distincts en fonction de la valeur du degré d'humidité relative déterminée par l'unité de contrôle 7. Chaque signal visuel affiché par l'élément d'affichage correspond alors, selon les cas, à une valeur de degré d'humidité relative prédéterminée, ou à une valeur différentielle d'humidité relative prédéterminée. Cet élément d'affichage peut être un écran pourvu de diodes électroluminescentes ou peut correspondre plus simplement à des indicateurs lumineux à diodes électroluminescentes, l'allumage d'une diode donnée correspondant à un seuil d'humidité relative prédéterminé.

## Revendications

1. Ensemble de mesure (1) d'un degré d'humidité relative à l'intérieur d'une montre (2), comprenant ladite montre (2) et un dispositif de détermination (4) du degré d'humidité présent dans l'enceinte (9) d'un boîtier (3) de cette montre (2), le dispositif de détermination (4) comprenant un système optique en espace libre et une unité de contrôle (7), le système comportant :
- un module émetteur (5) d'au moins un faisceau lumineux (8) ;
- un module récepteur (6) dudit au moins un faisceau lumineux (8);
ladite unité de contrôle (7) étant connectée aux dits modules (5, 6) et ledit au moins un faisceau lumineux (8) émis par le module émetteur (5) définissant un chemin optique en partie compris dans ledit boîtier (3) et allant jusqu'au module récepteur (6) et l'unité de contrôle (7) étant configurée pour évaluer l'absorption dudit faisceau lumineux (8) par la vapeur d'eau susceptible d'être présente dans ladite enceinte (9) du boîtier (3).

2. Ensemble de mesure (1) selon la revendication précédente, **caractérisé en ce qu'**il comprend au moins un élément réfléchissant (10, 11) dudit au moins un faisceau lumineux (8) agencé dans ladite enceinte (9) du boîtier (3) et/ou à l'extérieur de cette enceinte (9)

3. Ensemble de mesure (1) selon la revendication précédente, **caractérisé en ce que** ledit au moins un élément réfléchissant (10, 11), notamment un cadran (17) du boîtier (3), est apte à assurer une réflexion du faisceau lumineux (8) vers le module récepteur (5).

4. Ensemble de mesure (1) selon l'une quelconque des revendications 1 à 2, **caractérisé en ce qu'**il comprend une cavité optique (13) formée de deux éléments réfléchissants (12a, 12b) agencés l'un en regard de l'autre dans l'enceinte (9) du boîtier (3).

5. Ensemble de mesure (1) selon la revendication précédente, **caractérisé en ce que** lesdits éléments réfléchissants (12a, 12b) présentent une réflectivité à la longueur d'onde dudit au moins un faisceau lumineux (8).

6. Ensemble de mesure (1) selon la revendication précédente, **caractérisé en ce qu'**un premier élément réfléchissant (12a) est défini sur une portion d'une face interne d'une glace (15) du boîtier (3) en étant disposé en regard d'un deuxième élément réfléchissant (12b) agencé sur une portion du cadran (17).

7. Ensemble de mesure (1) selon l'une quelconque des revendications précédentes, **caractérisé en ce que** le module émetteur (5) est apte à émettre en simultanée ou en série plusieurs faisceaux lumineux à des longueurs d'ondes possédant des coefficients d'absorption différentes dans la vapeur d'eau.

8. Ensemble de mesure (1) selon l'une quelconque des revendications précédentes, **caractérisé en ce que** les modules émetteur et récepteur (5, 6) sont disposés en regard d'une glace (15) dudit boîtier (3).

9. Ensemble de mesure (1) selon l'une quelconque des revendications précédentes, **caractérisé en ce que** :
- le module émetteur (5) est disposé en regard d'une glace (15) dudit boîtier (3) lorsque le module récepteur (6) est agencé en regard d'un fond (16) de ce boîtier (3), ou
- le module émetteur (5) est disposé en regard d'un fond (16) dudit boîtier (3) lorsque le module récepteur (6) est agencé en regard d'une glace (15) de ce boîtier (3).

10. Ensemble de mesure (1) selon l'une quelconque des revendications précédentes, **caractérisé en ce que** le boîtier (3) comprend une glace (15), un cadran (17), un mouvement (18) et/ou un fond (16) comprenant au moins une zone de passage dudit au moins un faisceau lumineux (8).

11. Ensemble de mesure (1) selon l'une quelconque des revendications précédentes, **caractérisé en ce que** ledit dispositif de détermination (4) est configuré de manière à ce que ledit au moins un faisceau lumineux (8) circule entre le module émetteur (5) et le module récepteur (6) sans être guidé de façon à être confiné dans un espace différent d'un premier espace dans lequel est agencé le boitier et/ou d'un deuxième espace défini dans l'enceinte dudit boitier.
